# EUROPEAN PATENT SPECIFICATION

(11) **EP 1 859 569 B1**
(45) Date of publication and mention of the grant of the patent: **29.10.2014**
(21) Application number: 06710561.9
(22) Date of filing: 15.03.2006
(51) Int. Cl.: H04L 12/24, H04L 12/26, H04W 24/10

(54) **TRIGGERED STATISTICS REPORTING**
GETRIGGERTE STATISTIK-MELDUNG
TRANSMISSION AUTOMATIQUE DE STATISTIQUES PAR DECLENCHEMENT

(30) Priority: 16.03.2005 US 662531 P; 13.05.2005 US 680769 P; 21.09.2005 US 719038 P
(43) Date of publication of application: 28.11.2007
(73) Proprietor: Nokia Corporation, 02610 Espoo (FI)
(72) Inventor: KASSLIN, Mika, 02770 Espoo (FI); KNECKT, Jarkko, FIN-02330 Espoo (FI); JOKELA, Jari, FIN-33480 Ylojarvi (FI)
(74) Representative: Higgin, Paul
(86) International application number: PCT/IB2006/000592
(87) International publication number: WO 2006/097832

(56) References cited:
- EP-A1- 1 453 269
- WO-A1-2004/100450
- WO-A1-2004/100451
- WO-A2-2004/104737
- US-A1- 2003 107 990
- MEASUREMENT: "Draft Supplement to STANDARD FOR Telecommunications and Information Exchange Between Systems - LAN/MAN Specific Requirements - Part 11: Wireless Medium Access Control (MAC) and physical layer (PHY) specifications: Specification for Radio Resource Measurement ; 802.11k-D0.17", IEEE DRAFT; 802.11K-D0.17, IEEE-SA, PISCATAWAY, NJ USA, vol. 802.11k, no. D0.17, 16 July 2004 (2004-07-16), pages 1-110, XP017646706, [retrieved on 2004-07-16]

## Description

### BACKGROUND OF THE INVENTION

### 1. Field of the Invention

This invention relates generally to a communication system; more particularly, relates to a wireless local area network (WLAN) communication system set forth in the series of 802.11 Specifications of the Institute of Electrical and Electronics Engineers (IEEE).

### 2. Description of Related Art

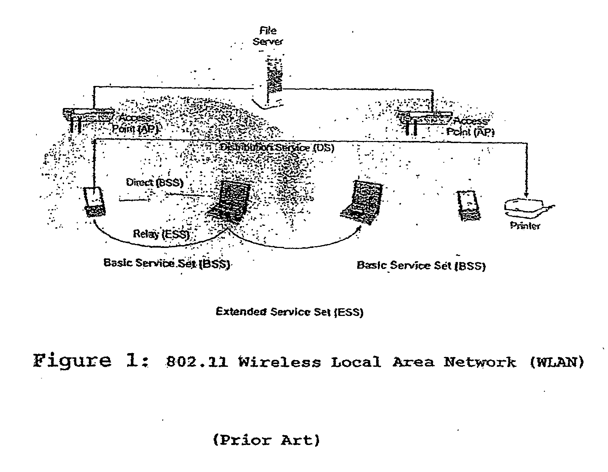

Figure 1 shows, by way of example, typical parts of an IEEE 802.11 WLAN system, which is known in the art and provides for communications between communications equipment such as mobile and secondary devices including personal digital assistants (PDAs), laptops and printers, etc. The WLAN system may be connected to a wired LAN system that allows wireless devices to access information and files on a file server or other suitable device or connecting to the Internet.

The devices can communicate directly with each other in the absence of a base station in a so-called "ad-hoc" network, or they can communicate through a base station, called an access point (AP) in IEEE 802.11 terminology, with distributed services through the AP using local distributed services (DS) or wide area extended services, as shown. In a WLAN system, end user access devices are known as stations (STAs), which are transceivers (transmitters/receivers) that convert radio signals into digital signals that can be routed to and from communications device and connect the communications equipment to access points (APs) that receive and distribute data packets to other devices and/or networks. The STAs may take various forms ranging from wireless network interface card (NIC) adapters coupled to devices to integrated radio modules that are part of the devices, as well as an external adapter (USB), a PCMCIA card or a USB Dongle (self contained), which are all known in the art.

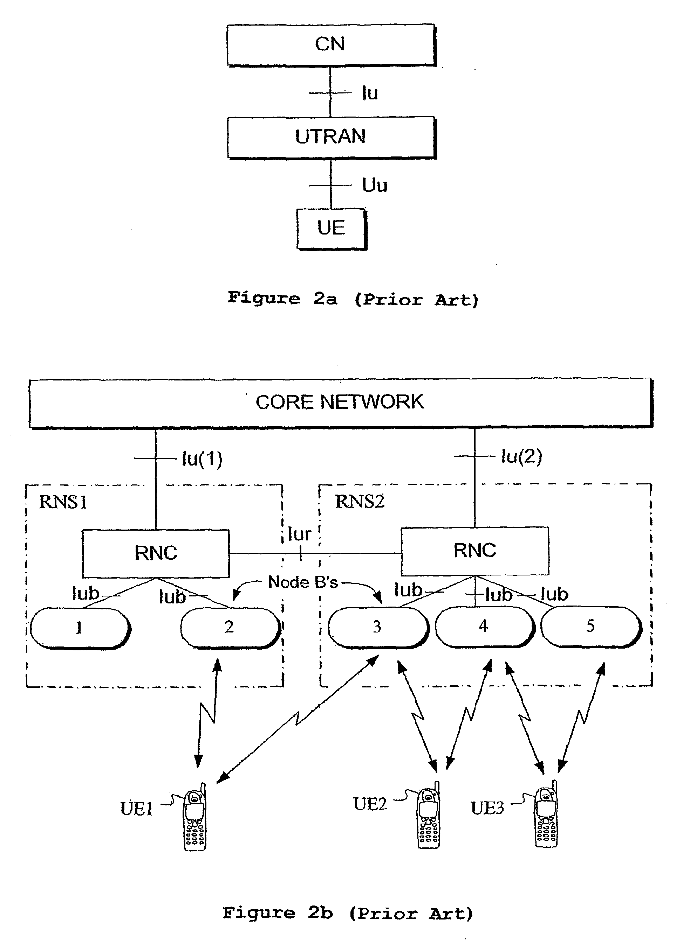

Figures 2a and 2b show diagrams of the Universal Mobile Telecommunications System (UMTS) packet network architecture, which is also known in the art. In Figure 2a, the UMTS packet network architecture includes the major architectural elements of user equipment (UE), UMTS Terrestrial Radio Access Network (UTRAN), and core network (CN). The UE is interfaced to the UTRAN over a radio (Uu) interface, while the UTRAN interfaces to the core network (CN) over a (wired) Iu interface. Figure 2b shows some further details of the architecture, particularly the UTRAN, which includes multiple Radio Network Subsystems (RNSs), each of which contains at least one Radio Network Controller (RNC). In operation, each RNC may be connected to multiple Node Bs which are the UMTS counterparts to GSM base stations. Each Node B may be in radio contact with multiple UEs via the radio interface (Uu) shown in Fig. 2a. A given UE may be in radio contact with multiple Node Bs even if one or more of the Node Bs are connected to different RNCs. For instance, a UE1 in Fig. 2b may be in radio contact with Node B2 of RNS1 and Node B3 of RNS2 where Node B2 and Node B3 are neighboring Node Bs. The RNCs of different RNSs may be connected by an Iur interface which allows mobile UEs to stay in contact with both RNCs while traversing from a cell belonging to a Node B of one RNC to a cell belonging to a Node B of another RNC. The convergence of the IEEE 802.11 WLAN system in Figure 1 and the (UMTS) packet network architecture in Figures 2a and 2b has resulted in STAs taking the form of UEs, such as mobile phones or mobile terminals. The interworking of the WLAN (IEEE 802.11) shown in Figure 1 with such other technologies (e.g. 3GPP, 3GPP2 or 802.16) such as that shown in Figures 2a and 2b is being defined at present in protocol specifications for 3GPP and 3GPP2.

In particular, wireless fidelity (Wi-Fi) technology is rapidly gaining acceptance by many corporate and individual entities as an alternative to a wired LAN. Wi-Fi is set forth in the series of IEEE 802.11 specifications. Wi-Fi access points (called "hot spots") have been established in various other in public spaces such as in hotels, airports, cafes, bookstores, among other public and private spaces. These "hot spots" enable individuals having mobile devices or stations such as mobile phones, lap tops, PDA's, and the like having wireless capabilities to access a wireless local area network (WLAN) to illustratively send and receive information over the as private network or the Internet.

Task Group K of IEEE 802.11 (TGk) is developing enhancements to the basic standard in respect of radio resource measurement capabilities. At the same time Task Group e (TGe) is finalizing Quality of Service (QoS) facilities to the base standard. TGk has received several submissions proposing to add QoS metrics and statistics to the 802.11k draft that has already means to request and deliver client Station (STA) statistics to the Access Point (AP).

The basic standard, IEEE Std 802.11k/D2.0, defines various measurement methods and related reporting mechanisms that can be used e.g. to collect transmission statistics to help optimize performance. The only methods possible are either to request the statistics in a snapshot manner or to set up periodic reporting using a repeated measurement request. New QoS metrics are expected to rely on these methods. However, the problem is that these reports are either sent periodically, even if conditions are fine, wasting bandwidth and processing power in APs and STAs.

IEEE Std 802.11k/D2.0 also allows client stations (STA) to send autonomous reports upon their own decisions. From the STAs perspective, this scheme could be used to report only when needed. However, the problem with this approach is that the AP has no control over what the STA reports, and therefore it cannot rely on receiving useful data.

The basic operation in measurement requests and reporting as per the current draft of IEEE Std 802.11k/D2.0 is as follows:
The AP can request an STA to perform measurements by sending a measurement request frame shown in Figure 3a with the category field set to 5. The measurement type is indicated by the measurement type field (Figure 3b) embedded into measurement request element in Figure 3a. One of the measurement types ) currently defined is STA statistics. The associated measurement type value is currently 9. The STA will reply to the request with a measurement report frame shown in Figure 4 with the category field set to 5. Measurement results are carried in measurement report fields of measurement report elements as shown in Figure 5. Measurement report field contents depend on a measurement type that is indicated by a measurement type field (Figure 5). The STA statistics measurement report is shown in Figure 6 as an example.

Thus, there is a need for a new statistics/metrics-reporting scheme that allows both the client terminal to report that something is going wrong, as well as for the AP to have control over the reporting rules.

WO 2004/104737 discloses that a beacon signal used in data communications, such as the IEEE 802.11, is provided with data extensions. The data extensions permit additional information to be provided by the beacon signal. Periodic beacon requests are made during connection between a wireless transmit/receive unit (WTRU) and an access point (AP) on a WLAN. A Measurement Request field corresponding to a beacon request contains a measurement duration value and channel number for which the request applies. The beacon request permits a scan mode which includes "Active Scan" mode, "Passive Scan" mode and "Beacon Table" mode.

IEEE Vol. 802.11k, no D0.17 is a draft supplement to the standard for information exchange between systems, with LAN/MAN specific requirements, including Part 11: Wireless Medium Access Control (MAC) and physical layer (PHY) specifications: Specification for radio resource measurement.

EP 1453269 is a method of reporting quality metrics for packet switched streaming in a wireless network between a server and a client, comprising the step of transporting content data from the server to the client using a real time streaming protocol, the step of reporting at least one quality metric relating to the delivered data stream from the client to the server using both an unreliable transport mechanism such as UDP and at least one reliable transport mechanism such as TCP.

### SUMMARY OF THE INVENTION

To overcome limitations in the prior art, and to overcome other limitations, a system and method of triggering autonomous measurements on QoS streams is disclosed.

The present invention provides a new and unique method and apparatus for generating a report on the quality of service (QoS) in a wireless local area network (WLAN) or other suitable network, wherein a first node, point or terminal provides a measurement request having a reporting rule or condition to a second node, point or terminal for determining when to report the quality of service (QoS).

The reporting rule or condition includes a trigger threshold, including information about triggered QoS statistics

In operation, the trigger threshold is met when a counter value exceeds a trigger threshold value.

According to various, but not necessarily all, embodiments of the invention there is provided a method as claimed in claim 1 to claim 20, an apparatus as claimed in claim 22 to claim 43, and a computer program as claimed in claims 21 and 44.

The first node, point or terminal may be an access point (AP), and the second node, point or terminal may be a station (STA) in the WLAN.

The first node, point or terminal may provide more than one trigger thresholds, including multiple measurement types across multiple channels.

In one particular embodiment, the method in accordance with embodiments of the present invention may include steps for determining whether triggered reporting should be used for a service/stream by the access point (AP); determining trigger thresholds for the service/stream with which triggered reporting is to be used in said AP; forming a frame that includes field(s) that are used to enable triggered reporting conditions and to indicate trigger conditions and thresholds in said AP; checking a request frame from the AP whether it includes said trigger reporting enabler and conditions in a mobile station receiver; starting autonomous measurements and setting trigger conditions as per the received and decoded request frame in said station; and forming a measurement report if trigger conditions are met and transmitting it to the AP in said station.

The apparatus may take the form of a wireless local area network (WLAN) or other suitable network, having such a first node, point or terminal that provides a measurement request having a reporting rule or condition to such a second node, point or terminal for determining when to report the quality of service (QoS), as well as a first node, point or terminal having a module for providing such a measurement request having such a reporting rule or condition. Moreover, the apparatus may take the form of a node, point or terminal for generating such a report on the quality of service (QoS) based on such a request from such another node, point or terminal in a wireless local area network (WLAN) or other suitable network, where the node, point or terminal has a module that receives the request having the reporting rule or condition for determining when to report the quality of service (QoS), and provides the report to the other node based on the rule or condition.

The apparatus may also take the form of a method for operating such a node, point or terminal, including a station (STA), for generating a report on the quality of service (QoS) based on a request from another node, point or terminal, including an access point (AP), in a wireless local area network (WLAN) or other suitable network, wherein the method comprises one or more steps for receiving a request having a reporting rule or condition for determining when to report the quality of service (QoS), and provides the report to the other node based on the rule or condition. The apparatus may take the form of a computer program product with a program code, which program code is stored on a machine readable carrier, for carrying out the steps of the method shown and described herein.

These and other features, aspects, and advantages of embodiments of the invention will become apparent with reference to the following description in conjunction with the accompanying drawings. It is to be understood, however, that the drawings are designed solely for the purposes of illustration and not as a definition of the limits of the invention.

### BRIEF DESCRIPTION OF THE DRAWING

The drawing, which is not necessarily to scale, include the following Figures:
Figure 1 shows typical parts of an IEEE 802.11 WLAN system, which is known in the art.
Figures 2a and 2b show diagrams of the Universal Mobile Telecommunications System (UMTS) packet network architecture, which is also known in the art.

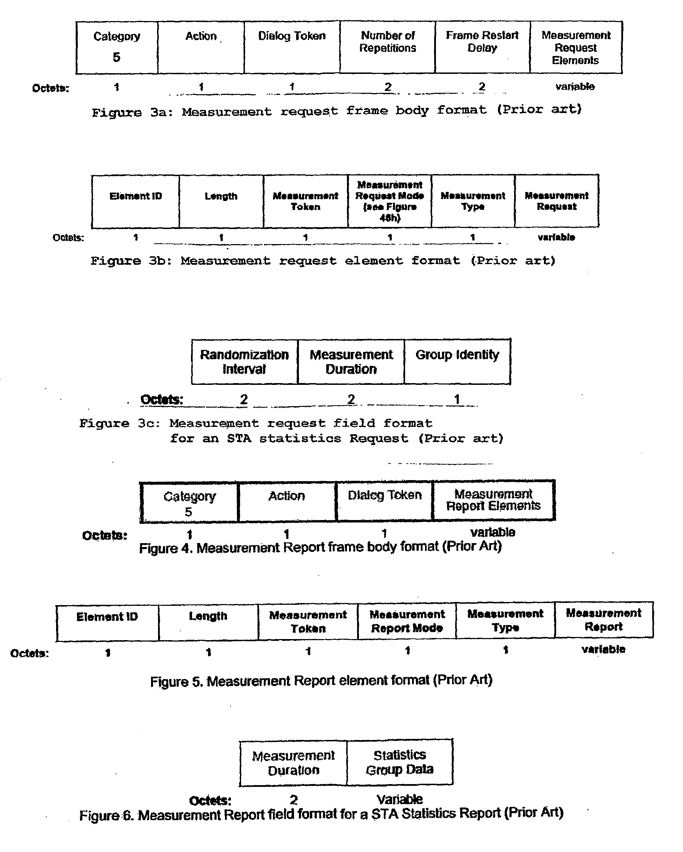

Figure 3a shows the Measurement Request frame body format for a measurement request frame that is known in the art and sent by an access point (AP) to a station (STA).
Figure 3b shows a Measurement Request element format for the measurement request element shown in Figure 3a.
Figure 3c shows a Measurement Request field format for the measurement request shown in Figure 3b for an STA Statistics Request.
Figure 4 shows a Measurement Report frame body format for a measurement report frame that is known in the art sent by the station (STA) back to the access point (AP).
Figure 5 shows a Measurement Report element format for the measurement report element shown in Figure 4.
Figure 6 shows a Measurement Report field format for the measurement report shown in Figure 5 for a STA Statistics Report.

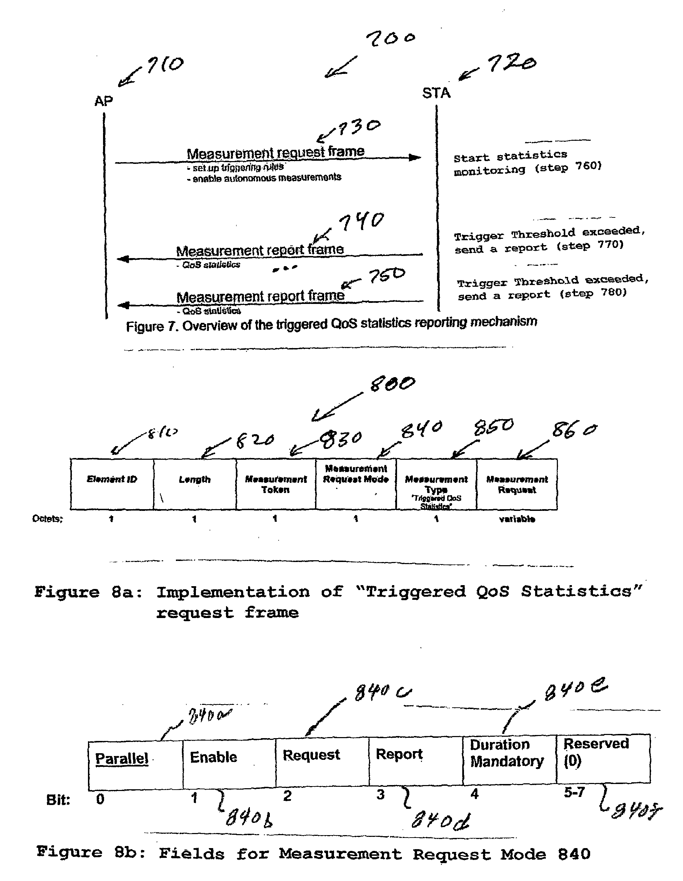

Figure 7 shows an overview of the triggered QoS Metrics reporting mechanism according to the present invention.
Figure 8a shows a Triggered QoS Metrics request frame in accordance with an exemplary embodiment of the invention.
Figure 8b shows the measurement request mode field in the Triggered QoS request frame in accordance with an exemplary embodiment of the invention.

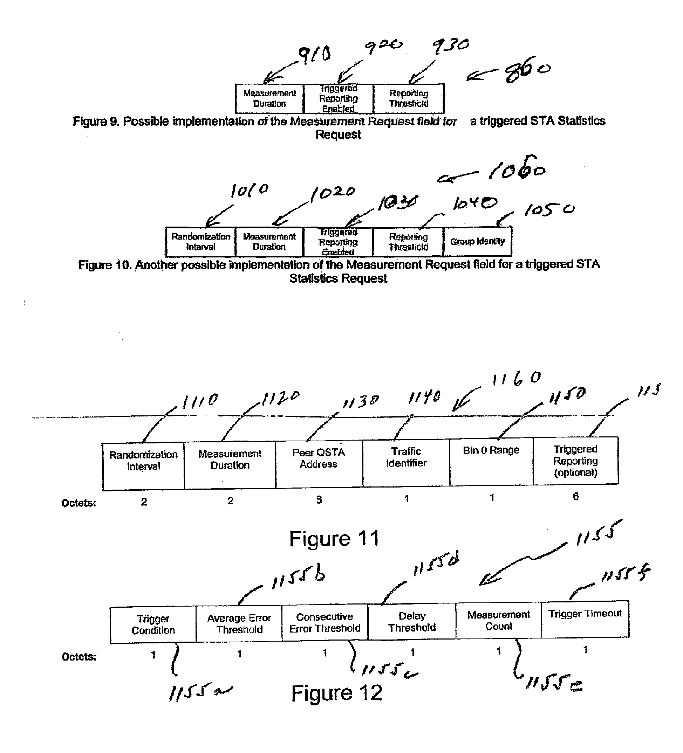

Figure 9 shows a Measurement Request field for a triggered STA Statistics Request in accordance with an exemplary embodiment of the invention.
Figure 10 shows a Measurement Request field for a triggered STA Statistics Request in accordance with another exemplary embodiment of the invention.
Figure 11 shows an alternative embodiment of a Measurement Request field format for a Transmit QoS Metrics Request in accordance with the present invention.
Figure 12 shows a Triggered Reporting field in accordance with an exemplary embodiment of the invention.

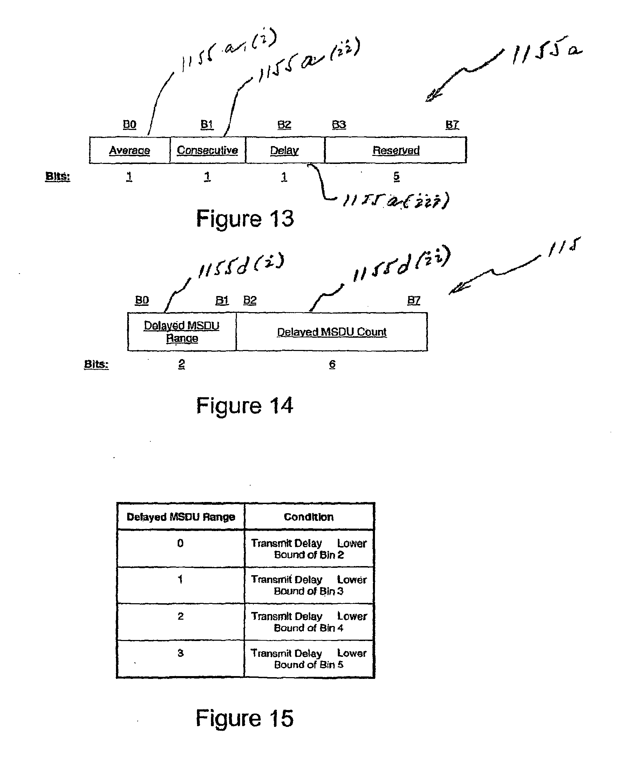

Figure 13 shows a Trigger Condition field in accordance with another exemplary embodiment of the invention.
Figure 14 shows a Delay Error Threshold subfield in accordance with an exemplary embodiment of the invention.
Figure 15 shows a Transmit Delay Histogram reflecting MSDU range definitions in accordance with an exemplary embodiment of the invention.

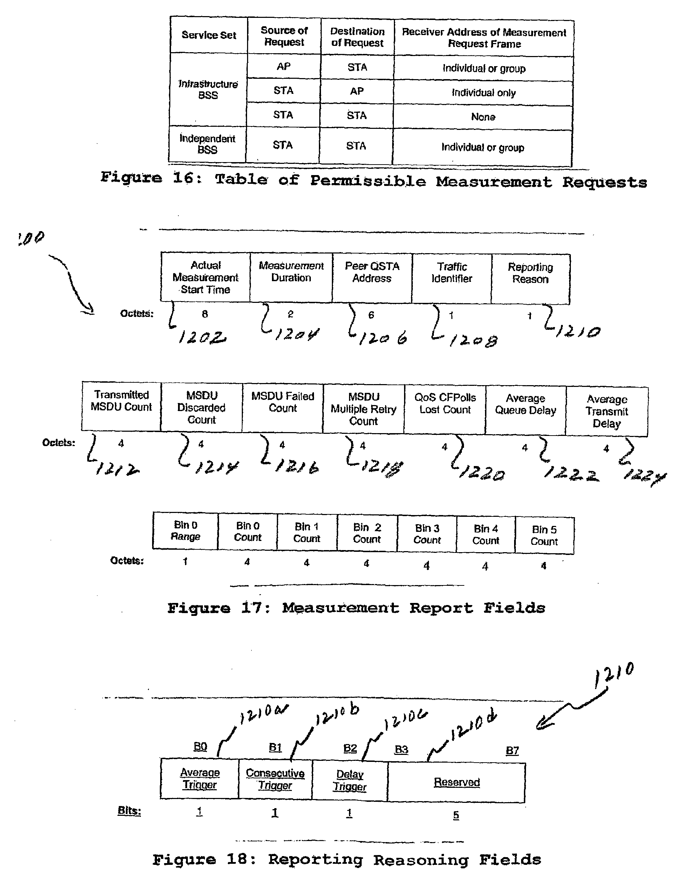

Figure 16 shows the allowable measurement requests in accordance with an exemplary embodiment of the invention.
Figure 17 shows a Measurement Report field format for Transmit QoS Metric Report in accordance with an exemplary embodiment of the invention.
Figure 18 shows a Reporting Reason field in accordance with an exemplary embodiment of the invention.

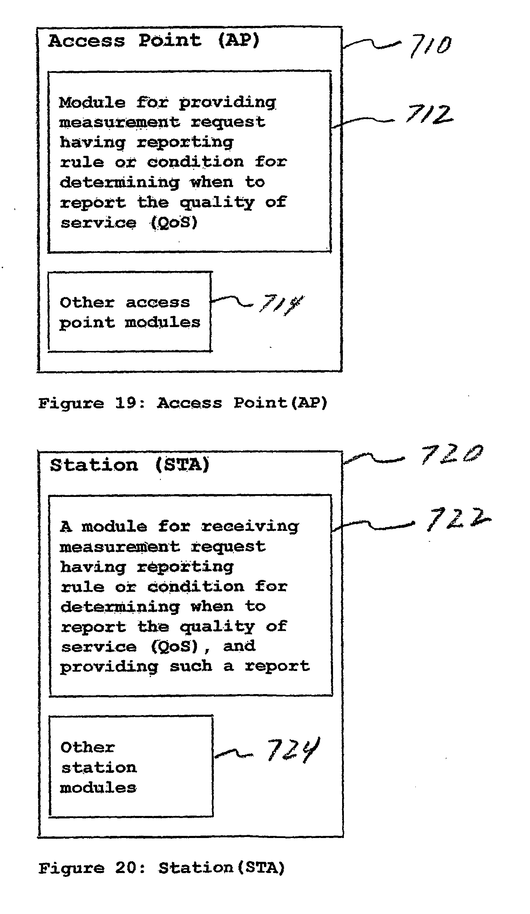

Figure 19 shows an access point (AP) according to the present invention.
Figure 20 shows a station (STA) according to the present invention.

In the following description of the exemplary embodiment, reference is made to the accompanying drawing, which form a part hereof, and in which is shown by way of illustration of an embodiment in which the invention may be practiced. It is to be understood that other embodiments may be utilized, as structural and operational changes may be made without departing from the scope of the present invention.

### DETAILED DESCRIPTION OF THE INVENTION

### Figure 7: The Basic Invention

To overcome limitations in the prior art, and to overcome other limitations a novel system and method of delivering QoS transmission statistics from a STA to the AP only when so agreed is disclosed. The novel statistics-reporting scheme in accordance with embodiments of the present invention allows standardized reporting conditions in the form of trigger thresholds related to QoS metrics.

Figure 7 shows an overview of a triggered QoS metrics reporting mechanism generally indicated as 700 in accordance with an embodiment of the invention. The reporting mechanism 700 is between an Access Point (AP) 710 and a Station (STA) 720. In this scheme, the AP 710 has control of reporting rules and conditions, and determines whether it wants the STA 720 to report if perceived service is not entirely ok. The AP 710 determines the rules for reporting by setting one or more trigger thresholds for the service (i.e. stream) of the STA 720. The AP 710 indicates this to the STA 720 by transmitting a measurement request frame 730 in step 760. The measurement request frame 730 may be used by the AP 710 to set triggering rules or conditions and enable autonomous measurements. In response thereto, the STA 720 performs measurements by statistics monitoring, which may be started upon receipt of measurement request frame 730 from the AP 710. The STA 720 may report statistics only when needed as per the trigger rules and conditions. If the trigger condition are met (e.g. a counter value exceeds the threshold) in step 770, the STA 720 provides an autonomous report by sending, for example, a measurement report frame 740 to the AP 710. As indicated by step 780, there may be more then one triggering rules and condition, thus more than one other autonomous reports may be sent as indicated by 750.

### Figures 8a, 8b: The Triggered QoS Metrics Request Frame

Figure 8a shows a Triggered QoS Metrics request frame generally indicated as 800 in accordance with an embodiment of the invention. The triggered QoS Metrics request frame 800 includes, for example, an element ID 810, a length 820, a measurement token 830, a measurement request mode field 840, a measurement type 850, and a measurement request 860. The field of the measurement type 850 contains information about a triggered QoS statistic. The field of the measurement request 860 may contain information to enable/disable triggered reporting conditions and to set trigger thresholds (i.e. thresholds for reporting).

Figure 8b shows an exemplary embodiment of the measurement request mode 840, which includes 8 bits in the form of a parallel bit 840a, an enable bit 840b, a request bit 840c, a report bit 840d and a duration mandatory bit 840e, the functionality of which is set forth below. The remaining bits 5-7 indicated by reference label 840f are presently reserved for future use.

Within the measurement request mode field, the enable bit 840a is used to differentiate between a request to make a measurement and a request to control the measurement requests and autonomous reports generated by the destination STA. When the Enable bit 840b is set to 0, the Measurement Request field contains the specification of the measurement request corresponding to the measurement type field 850. The measurement request field 860 is not present when the enable bit 840b is set to 1, except when requesting a triggered QoS Metrics measurement.

### Figure 9:

Figure 9 shows one implementation for the measurement request 860 (Figure 8a) for the triggered STA Statistics Request in accordance with an embodiment of the invention. As shown, the measurement Request 860 may include fields such as a measurement duration 910, a triggered reporting enabled/disabled 920, and a reporting threshold 930.

In particular, the measurement duration 910 may, preferably, be set equal to the duration of the requested measurement, expressed, for example, in TUs. When setting up a triggered QoS measurement, the measurement duration field 910 is not used and may, preferably, be set to 0. The triggered reporting enabled 920 enables the triggered reporting. The triggered reporting 930 is used to specify measurement trigger thresholds, and is present if setting up the triggered QoS metrics reporting.

### Figure 10

Figure 10 shows, by way of example, another embodiment of fields generally indicated as 1060 for the measurement request 860 in Figure 8a for the triggered STA Statistics Request frame 800 in accordance with the present invention. As shown, the fields 1060 may include a randomization interval 1010, a measurement duration 1020, a triggered reporting enabled 1030, a reporting threshold 1040, and a group identity 1050.

In this embodiment, the triggered reporting fields may be embedded into the measurement request field 860 of an STA statistics measurement request frame. In this case, the measurement type field 850 in Figure 8a is set to indicate STA statistics measurements. The measurement request field 850 should then have fields specific for triggered reporting, i.e. trigger enable/disable and trigger threshold indicators.

With Reporting Threshold (or similar) fields in a request frame such as 800 (Figure 8a), the AP 710 determines conditions for the STA 720 to send a report. In one embodiment of the invention reporting, the conditions are defined as thresholds for (QoS) statistics counters of the STA or a stream of thereof. By way of example, possible trigger thresholds are:
- The number of MAC protocol data unit MPDU or MAC service data unit MSDU failures over a specified number of transmitted MSDUs - the number of transmitted MSDUs is specified by the Measurement count field; or
- The number of consecutive MPDU or MSDU failures; or
- The consecutive MPDUs or MSDUs delayed by more than a threshold; or
- some combination thereof.
The scope of the invention is not intended to be limited to only these such trigger thresholds; and embodiments are envisioned using other trigger thresholds either now known or later developed in the future.

If a trigger condition is met in an STA, then the STA sends an STA Statistics Report with related metrics for the stream.

It is noteworthy that the scope of the invention is not intended to be limited to only the fields shown and described herein; and embodiments are envisioned in which other fields are also present. Moreover, the order of the fields shown in the figures herein may differ depending on the implementation.

### Figure 11

Figure 11 shows another embodiment of fields 1160 that may be used for a measurement request such as 860 in Figure 8a that corresponds to a transmit QoS metrics request. The fields 1160 may include a randomization interval 1110, a measurement duration 1120, a peer QSTA address 1130, a traffic identifier 1140, a bin 0 range 1150 and an optional triggered reporting 1155.

As shown, the randomization interval 1110 may, preferably, be set to a desired maximum random delay in the measurement start time, expressed in TUs. The use of the randomization interval field in relation to the measurement start time is further described in section 11.11.3 of IEEE 802.11. The randomization interval field 1110 is not used and may, preferably, be set to 0 when requesting a triggered QoS metrics measurement.

The measurement duration 1120 may, preferably, be set equal to the duration of the requested measurement, expressed in TUs. When setting up a triggered QoS measurement, the measurement duration field 1120 is not used and may, preferably, be set to 0.

The peer QSTA address 1130 may, preferably, contain the 6-byte MAC address in the Address 1 field of the measured data frames.

The traffic identifier 1140 may, preferably, indicate the TC or TS for which traffic is to be measured. In the traffic identifier field 1140, values 0 through 15 are presently defined, while values 16-255 are reserved for future use.

The bin 0 range 1150 may, preferably, indicate the delay range of the first bin (Bin 0) of the transmit delay histogram, expressed in TUs. It is also used to calculate the delay ranges of the other 5 bins making up the histogram. The delay range for each bin may, preferably, increase in a binary exponential fashion.

The triggered reporting 1155 is used to specify measurement trigger thresholds. It is only present if setting up triggered QoS metrics reporting.

### Figures 12-15:

Figure 12 shows one embodiment of field of the Triggered Reporting 1155 in further detail, which may include a trigger condition 1155a, an average error threshold 1155b, a consecutive error threshold 1155c, a delay threshold 1155d, a measurement count 1155e, a trigger timeout 1155f.

The trigger Condition 1155a is a bit-field that specifies reporting triggers when requesting a triggered QoS metrics measurement. The format of Trigger Condition field 1155a is shown in further detail in Figure 13, and includes bits for average 1155a(i), consecutive 1155(ii), delay 1155(iii) and a reserve section 1155(iv).
- The average bit 1155a(i) is set to 1 to request that a QoS Metrics Report be generated when the number of MSDUs for the TC, or TS given by the Traffic Identifier that are discarded over the moving average number of transmitted MSDUs specified in Measurement Count is equal to the value given in Average Error Threshold. MSDUs discarded due to the number of transmit attempts exceeding dot11ShortRetryLimit or dot11LongRetryLimit, or due to the MSDU lifetime having been reached may, preferably, be counted.
- The consecutive bit 1155a(ii) is set to 1 to request that a QoS Metrics Report be generated when the number of MSDUs for the TC, or TS given by the Traffic Identifier that are discarded in succession is equal to the value given in Consecutive Error Threshold. MSDUs discarded due to the number of transmit attempts exceeding the appropriate retry limit, or due to the MSDU lifetime having been reached may, preferably, be counted.
- The delay bit 1155a(iii) is set to 1 to request that a QoS Metrics Report be generated when the number of consecutive MSDUs for the TC, or TS given by the Traffic Identifier that experience a transmit delay greater than or equal to the lower bound of the bin of the Transmit Delay Histogram specified by the value in Delayed MSDU Range equals the value given in Delayed MSDU Count.

The Average Error Threshold field 1155b contains a value representing the number of MSDUs to be used as the threshold value for the Average trigger condition.

The Consecutive Error Threshold field 1155c contains a value representing the number of MSDUs to be used as the threshold value for the Consecutive trigger condition.

The Delay Threshold field 1155d contains two subfields as shown in Figure 14, including a delayed MSDU Range subfield 1155d(i) and a delayed MSDU count 1155d(ii), where:
the delayed MSDU range subfield 1155d(i) contains a value representing the MSDU transmit delay at or above which an MSDU will be counted towards the delayed MSDU count threshold. The delayed MSDU range 1155(i) is encoded as a value representing the lower bound of a bin in the Transmit Delay Histogram as shown in Figure 15; and
the delayed MSDU count subfield 1155d(ii) contains a value representing the number of MSDUs to be used as the threshold value for the delay trigger condition.

The measurement count field 1155e contains a number of MSDUs. This value is used in the Average Error Threshold and in place of measurement duration in determining the scope of the reported results when a report is triggered.

The trigger timeout field 1155f contains a value in units of 100TU during which a measuring STA may, preferably, not generate further triggered QoS metrics reports after a trigger condition has been met.

### STA Requesting and Reporting of Measurements

The requesting and reporting of measurements by STAs are based on the certain rules and principles which are described below. The permissible requests are represented in the table shown in Figure 16.

An STA may measure one or more channels itself or a STA may request peer STAs in the same Base Service Set (BSS) to measure one or more channels on its behalf.

When requesting other STAs to measure one or more channels, the STA may, preferably, use a measurement request frame containing one or more measurement request elements. The measurement request may be sent to a unicast, multicast or broadcast destination address. The permitted measurement requests are shown in Table 16.

The source and destination of a measurement request may, preferably, both be a member of the same BSS or a member of the same IBSS.

The set of requested measurements received in the most recently received measurement request frame of highest precedence is active at the STA. The precedence order for measurement requests may, preferably, be as follows:
- Measurement requests received in individually addressed measurement request frames.
- Measurement requests received in multicast-group addressed measurement request frames.
- Measurement requests received in broadcast addressed measurement request frames.

The measurement request elements are processed in sequence, with certain measurement request elements processed in parallel according to the parallel bit field setting in Figure 8b. If measurement resources are available, the STA processes each element by setting up and making the specified measurement.

The measurement request elements within a measurement request frame may specify multiple measurement types across multiple channels.

The STA may receive another measurement request frame while the measurements requested in a previous Measurement Request frame are pending or in-progress. In this case, the set of measurement requests in the new frame supersedes any previous requests received in a measurement request frame of the same or lower precedence, and the measuring STA may, preferably, discard any partial results from the previous measurements. If a station receives a measurement request frame with lower precedence than the currently active measurement request frame, the station may, preferably, discard the measurement requests in the new measurement request frame. In an exemplary embodiment, measurement request elements that have the enable bit set to 1 may, preferably, be processed in all received measurement request frames regardless of these precedence rules. The STA that issues a measurement request to another STA to perform a measurement on the serving channel may transmit MPDUs and MMPDUs to that STA during the measurement itself.

An STA that issues a measurement request to another STA to perform a measurement on a non-serving channel is not required to take any special action to suspend traffic to that STA. All stations may, preferably, maintain data services and an association or membership with the BSS or IBSS respectively, on the serving channel while performing measurements on non-serving channels.

The result of each measurement requested in a measurement request element may, preferably, be reported in a measurement report element of type corresponding to the request. The result of each measurement should be returned without undue delay to the requesting STA.

When more than one measurement request element is present in a measurement request frame, the STA may return the corresponding measurement report elements in one or more measurement report frames.

Each measurement report frame may, preferably, contain the same dialog token field value as the corresponding measurement request frame. Each measurement report element may, preferably, contain the same measurement token field value as the corresponding measurement request element.

When an STA is permanently unable to make a requested measurement the STA may, preferably, respond to such a unicast measurement request with an indication that it is incapable of completing the measurement request. A STA may, preferably, not respond to broadcast and multicast requests in this manner. Examples of when an incapable response is appropriate are:
- The requested measurement type is not supported.
- The measuring STA cannot support requested parallel measurements due to one or more requests relating to different channels.

An STA may refuse to make any requested measurement and may, preferably, respond to such a unicast measurement request with an indication that it is refusing the measurement request. The STA may, preferably, not respond to broadcast and multicast requests in this manner.

Since measurements on non-serving channels could potentially degrade a station's performance, non-serving channel measurements should be requested sparingly and for short durations. Since measurements on the serving channel execute concurrently with normal traffic processing, serving channel measurements may be requested more frequently and for longer durations. If desired, the requesting STA may issue periodic concurrent measurement requests to achieve near-continuous reporting.

### Figure 17: Format of Measurement Report Field

Figure 17 shows the format of the measurement report field generally indicated as 1200 corresponding to a Transmit QoS Metrics Report.

An actual Measurement Start Time 1202 may, preferably, be set equal to the TSF at the time at which the measurement started, or for a triggered QoS metrics report the TSF value at the reporting QSTA when the trigger condition was met.

A measurement duration 1204 may, preferably, be set equal to the duration over which the Transmit QoS Metric Report was measured, expressed in TUs. For a triggered QoS Metrics Report, metrics are reported over a number of transmitted MSDUs rather than a duration and the measurement duration may, preferably, be set to 0.

A Peer QSTA Address 1206 may, preferably, contain the 6 byte MAC address in the Address 1 field of the measured Data frames.

A traffic identifier 1208 may, preferably, indicate the TC or TS for which traffic is to be measured. Values 0 through 15 are defined. Values 16-255 are reserved.

A reporting reason field 1210 is.a bit field indicating the reason that the measuring QSTA sent the Transmit QoS metrics report. The Reporting Reason field 1210 is shown in more detail in Figure 18.
- An Average Trigger bit 1210a set to 1 indicates that the Transmit QoS Metrics Report was generated as a triggered report due to the Average Error trigger.
- The Consecutive Trigger bit 1210b set to 1 indicates that the Transmit QoS Metrics Report was generated as a triggered report due to the Consecutive Error trigger.
- The Delay Trigger bit set 1210c to 1 indicates that the Transmit QoS Metrics Report was generated as a triggered report due to the Delay Error trigger.

In a requested Transmit QoS Metrics Report, all bit fields in the Reporting Reason field 1210 are set to 0. More than one bit field in the Reporting Reason field may be set to 1 if more than one trigger condition was met.

The Transmitted MSDU Count 1212, MSDU Discarded Count 1214, MSDU Failed Count 1216, MSDU Multiple Retry Count 1218, QoS CFPolls Lost Count 1220, Average Queue Delay 1222, Average Transmit Delay 1224, and delay histogram fields relate to transmissions to the QSTA given in the Peer QSTA Address field 1206. Metrics may, preferably, be reported over the measurement duration, or for triggered QoS metrics, over the measurement count.

The Transmitted MSDU Count field 1212 contains the number of MSDUs for the TC, or TS given by the Traffic Identifier successfully transmitted.

The MSDU Discarded Count field 1214 contains the number of MSDUs for the TC, or TS given by the Traffic Identifier discarded due either to the number of transmit attempts exceeding dot11ShortRetryLimit or dot11LongRetryLimit as appropriate, or due to the MSDU lifetime having been reached.

The MSDU Failed Count field 1216 contains the number of MSDUs for the TC, or TS given by the Traffic Identifier 1208 discarded due to the number of transmit attempts exceeding dot11ShortRetryLimit or dot11LongRetryLimit as appropriate.

The MSDU Multiple Retry Count field 1218 contains the number of MSDUs for the TC, or TS given by the Traffic Identifier 1208 that are successfully transmitted after more than one retransmission attempt.

The QoS CFPolls Lost Count field 1220 contains the number of QoS (+)CF-Poll frames transmitted where there was no response from the QSTA. The QoS CFPolls Lost Count 1220 may, preferably, only be returned if the reporting QSTA is a QAP and the Traffic Identifier 1208 is for TS. If unused, the QoS CFPolls Lost count 1220 may, preferably, be set to 0.

The average queue delay 1222 may, preferably, be the average queuing delay of the frames (MSDUs) that are passed to the MAC for the indicated Peer QSTA Address 1206 and the indicated Traffic Identifier 1208. The queue delay 1222 may, preferably, be measured from the time the MSDU is passed to the MAC until the point at which the first, or only fragment is ready for transmission and may, preferably, be expressed in TUs.

The average transmit delay 1224 may, preferably, be the average delay of the frames (MSDUs) that are successfully transmitted for the indicated Peer QSTA Address 1206 and the indicated Traffic Identifier 1208. The delay may, preferably, be measured from the time the MSDU is passed to the MAC until the point at which the entire MSDU has been successfully transmitted, including receipt of the final ACK from the peer QSTA if the QoSAck service class is being used. Average Transmit delay may, preferably, be expressed in TUs.

### Triggered Autonomous Reporting

Triggered Autonomous Reporting is defined for the Transmit QoS Metrics measurement type and is described in the following paragraphs.

Autonomous reporting is defined for Spectrum Management measurements supporting DFS. It allows a STA to report the results of measurements to a peer STA for which there was no explicit measurement request. In this case, the transmission of autonomous reports may, preferably, be entirely the decision of the STA at which such reporting has been enabled. An example of this use would be to report a change in conditions at the STA observed as a result of background measurement, e.g. the presence of a radar signal.

In radio measurement, all autonomous reporting may, preferably, be subject to trigger conditions set by the enabling STA that determine when measurement reports are issued. This is termed triggered autonomous reporting and provides a method for reporting during continuous background measurement. An example of the use of triggered autonomous measurement is for reporting problem conditions in continuous, non-invasive statistical monitoring.

Triggered autonomous reporting is defined only for the Transmit QoS Metrics measurement type.

A STA indicates that it wishes to accept triggered autonomous reports by sending a Measurement Request element with the Enable and Report bits set to 1. The type of measurement is indicated in the Measurement Type field. Trigger conditions that determine when measurement reports are to be generated may, preferably, be specified in the Measurement Request field. A Measurement Request element that is being used to control triggered autonomous reporting may, preferably, be sent within a Radio Measurement Request frame. Measurement Request elements being used to request measurements may also appear in the same Measurement Request Frame. The Measurement Request frame may be sent to a group receiver address to enable triggered autonomous reports at more than one STA.

A STA may, preferably, not send autonomous reports for radio measurement types without trigger conditions having been set. If a Measurement Request element is received with the Enable and Report bits set to 1 without trigger conditions in the Measurement Request field then that Measurement Request element may, preferably, be ignored.

If a request to enable triggered autonomous reporting is sent to an individual address and the recipient STA does not support measurements of the type indicated, a Measurement Report element may, preferably, be returned to the requesting STA with the Incapable bit set. A STA may also refuse to enable triggered autonomous reporting. In this case a Measurement Report element may, preferably, be returned to the requesting STA with the refused bit set. Such responses may, preferably, not be issued if the request to enable triggered autonomous reporting was sent to a group address.

A STA receiving a request to enable triggered autonomous reporting from another STA may send reports of the appropriate type, addressed to the individual address of the STA that sent the enable request. Autonomous reports may, preferably, only be sent to the individual addresses of STAs from which a valid enable request has been received and may, preferably, only be issued when the trigger conditions have been met.

A STA may update the trigger conditions set for triggered autonomous reports by issuing a new Measurement Request element with the Enable and Report bits both set to 1, the Measurement Type field set to the appropriate type and the Measurement Request field indicating the new trigger conditions. A STA disables all triggered autonomous measurement reports by sending a Measurement Request element with the Enable bit set to 1 and the Report bit set to 0.

A STA in an infrastructure BSS may, preferably, cease all triggered autonomous reporting if it disassociates, or reassociates to a different BSS. A STA in an independent BSS may, preferably, cease all triggered autonomous reporting if it leaves the BSS.

Triggered autonomous reporting and requested measurements are independent: a STA may request measurements from another STA even if it has enabled triggered autonomous reporting from that STA. All Measurement Request elements received in Radio Measurement Request frames that have the Enable bit set may, preferably, be processed without regard for the measurement precedence rules for requested measurements.

A QSTA receiving a Transmit QoS Metrics Request may, preferably, respond with a Radio Measurement Report frame containing one Measurement (Transmit QoS Metrics) Report element. If the traffic stream (TS) that is corresponding to the Traffic Identifier is deleted, either by a DELTS Action Frame or by disassociation, the STA may, preferably, cease sending Radio Measurement Reports.

The Transmit QoS Metrics measurement may, preferably, be made on traffic that is transmitted from the measuring QSTA to the peer QSTA and TC or TS indicated in the request. The Peer QSTA Address may be the MAC address of the QSTA from which the Measurement Request was sent, or the MAC address of another QSTA within the QBSS. This enables a QAP to query Transmit QoS metrics for DLS links. A QAP may, preferably, refuse measurement requests for traffic to other QSTAs in the BSS.
The requesting and reporting STAs must be QSTAs. A non-QSTA receiving a Transmit QoS Metrics Measurement Request may, preferably, reject the request with indication of "incapable".

A QSTA may request that a QoS metrics report be sent when MSDU discard, or delay metrics for a specified TC, or TS at a measuring QSTA reach a defined threshold. This is termed a triggered QoS metrics measurement and may, preferably, be requested by setting the Enable and Report bits to 1 within a Measurement Request Element containing the QoS Metrics Measurement Type. The Measurement Request field may, preferably, contain a QoS Metrics Request with the trigger conditions specified in the Triggered Reporting field. One or more trigger conditions may be set with specified thresholds.

A triggered QoS metrics request may, preferably, not be sent to a QAP. A QAP that receives a triggered QoS metrics request may, preferably, not respond. The number of simultaneous triggered QoS metrics measurements supported at non-AP QSTA is outside the scope of the standard.

A non-AP QSTA accepting a triggered QoS measurement may, preferably, measure the requested TC, or TS. If a trigger condition occurs, the measuring non-AP QSTA may, preferably, send a QoS metrics measurement report to the requesting QSTA. The measuring non AP-QSTA may, preferably, not send further triggered QoS reports until the Trigger Timeout period specified in the request has expired, or new trigger conditions have been requested. Measurement of QoS Metrics may, preferably, continue during the reporting timeout period.

If a non-AP QSTA receives a requested QoS metrics measurement for a TC, or TS that is already being measured using a triggered QoS metrics measurement, the triggered QoS measurement may, preferably, be suspended for the duration of the requested QoS measurement. When triggered measurement resumes the QoS metrics may, preferably, be reset.

QoS metrics reported in a triggered QoS metrics report may, preferably, be the values accumulated over the number of transmitted MSDUs prior to the trigger event given in the Measurement Count field of the QoS metrics measurement request that established the trigger condition. It is possible that a consecutive or delay trigger event occurs after acceptance of a triggered QoS metrics measurement but before the number of MSDUs in Measurement Count have been transmitted. In this case the report may, preferably, be the values accumulated since measurement started. The measurement count value appears in the Transmitted MSDU Count field of a triggered QoS metrics measurement report. Measurement duration may, preferably, not be used in triggered QoS measurement and the Measurement Duration field in both the Measurement Request and any Measurement Report may, preferably, be set to 0.

The Measurement Start Time field of a triggered QoS metrics report may, preferably, contain the value of the QSTA TSF timer at the time the trigger condition occurred to an accuracy of ±1TU.

Once accepted by a measuring non-AP QSTA, a triggered QoS measurement continues to be active until:
- The relevant TS is deleted,
- The measuring non-AP QSTA disassociates or successfully reassociates, or
- The measurement is terminated by the requesting QSTA.

All triggered QoS measurements may, preferably, be terminated at a measuring non-AP QSTA by receiving a triggered QoS metrics measurement request with the Enable bit set to 1 and the Report bit set to 0. A QoS metrics measurement request with no trigger conditions may, preferably, terminate a triggered QoS measurement for the TC, or TS specified in the request. A QSTA requesting a triggered QoS measurement may update the trigger conditions by sending a triggered QoS metrics measurement request specifying the new trigger conditions.

### Figures 19-20: Nodes, STAs, Points or Terminals

The AP 710 or other suitable network node or terminal 10 shown in Figure 19 and the STA is shown in Figure 20, for operating in a wireless LAN network consistent with that shown and described herein. The AP 710 and the STA 720 have corresponding modules 712 and 722 for providing a measurement request having a reporting rule or condition to a second node, point or terminal for determining when to report the quality of service (QoS), and for receiving the request and providing the report based on the rule or condition, consistent with that shown and described herein.

### Implementation of the Functionality of the Modules 712 and 722

The functionality of the AP 10 and STA 20 described above may be implemented in the corresponding modules 712 and 722 shown in Figures 19 and 20. By way of example, and consistent with that described herein, the functionality of the modules 712 and 722 may be implemented using hardware, software, firmware, or a combination thereof, although the scope of the invention is not intended to be limited to any particular embodiment thereof. In a typical software implementation, the module 712 and 722 would be one or more microprocessor-based architectures having a microprocessor, a random access memory (RAM), a read only memory (ROM), input/output devices and control, data and address buses connecting the same. A person skilled in the art would be able to program such a microprocessor-based implementation to perform the functionality described herein without undue experimentation. The scope of the invention is not intended to be limited to any particular implementation using technology now known or later developed in the future. Moreover, the scope of the invention is intended to include the modules 712 and 722 being a stand alone modules, as shown, or in the combination with other circuitry for implementing another module.

The other modules 714 and 724 in the AP 710 and STA 720 and the functionality thereof are known in the art, do not form part of the underlying invention per se, and are not described in detail herein. For example, the other modules 724 may include other modules that formal part of a typical mobile telephone or terminal, such as a UMTS subscriber identity module (USIM) and mobile equipment (ME) module, which are known in the art and not described herein.

### References

The reader is referred to the following documents:
IEEE Std 802.11k/D2.0, Draft Supplement to STANDARD FOR Telecommunications and information exchange between systems - Local and metropolitan area networks - LAN/MAN Specific requirements - Part 11: Wireless LAN Medium Access Control (MAC) and Physical Layer (PHY) specifications: Radio Resource Measurement, February 2005.
IEEE Std 802.11-1999□ (Reaff 2003), Information technology - Telecommunications and information exchange between systems-Local and metropolitan area networks - Specific requirements - Part 11: Wireless LAN Medium Access Control (MAC) and Physical Layer (PHY) specifications.
IEEE Std 802.11h□-2003, Information technology - Telecommunications and information exchange between systems-Local and metropolitan area networks - Specific requirements-Part 11: Wireless LAN Medium Access Control (MAC) and Physical Layer (PHY) specifications: Spectrum and Transmit Power Management Extensions in the 5 GHz band in Europe.
P802.11e™, (Draft Version: D13, 2005) Draft Amendment to Standard for Information Technology-- Telecommunications and Information Exchange Between Systems--LAN/MAN Specific Requirements-- Part 11 Wireless Medium Access Control (MAC) and Physical Layer (PHY) specifications: Amendment 7: Medium Access Control (MAC) Quality of Service (QoS) Enhancements.

### Scope of the Invention

Although described in the context of particular embodiments, it will be apparent to those skilled in the art that a number of modifications and various changes to these teachings may occur. Thus, while the invention has been particularly shown and described with respect to one or more preferred embodiments thereof, it will be understood by those skilled in the art that certain modifications or changes, in form and shape, may be made therein without departing from the scope of the invention as set forth above.

## Claims

1. A method comprising:
receiving, by a second node, point or terminal (720), a measurement request 1160 having a trigger threshold 1155c value for a number of consecutive medium access control protocol data unit or medium access control service data unit failures from a first node, point or terminal (710) for determining when to report quality of service metrics, and
providing a report (1200, 1210b) on the quality of service metrics in a wireless local area network or other suitable network to the first node, point or terminal (710) in response to a counter value for the number of consecutive medium access control protocol data unit or medium access control service data unit failures exceeding the trigger threshold (1155a) value for the number of consecutive medium access control protocol data unit or medium access control service data unit failures.

2. A method according to claim 1, wherein the trigger threshold is based at least partly on thresholds for quality of service statistics.

3. A method according to claim 1, wherein the first node, point or terminal (710) is an access point and the second node, point or terminal (720) is a station.

4. A method according to claim 1, wherein the first node, point or terminal (710) is configured to provide more than one trigger threshold value, including multiple measurement types across multiple channels.

5. A method according to claim 1, wherein the trigger threshold value is provided in a measurement request frame (730) that contains either a randomization interval, a measurement duration, a peer address, a traffic identifier, a bin 0 range, a triggered reporting enabled, a reporting threshold, a group identity, or some combination thereof.

6. A method according to claim 1, wherein if the trigger threshold value is met, then the second node, point or terminal (720) is configured to send a measurement report (740) containing information about the quality of service.

7. A method according to claim 1, wherein the second node, point or terminal (720) is configured to measure one or more channels itself, or the second node or point is configured to request a peer node, point or terminal to measure the one or more channels on its behalf, or some combination thereof.

8. A method according to claim 7, wherein when requesting other nodes, points or terminals to measure one or more channels, the second node, point or terminal (720) is configured to provide a measurement request frame (730) containing one or more measurement request elements.

9. A method according to claim 8, wherein the measurement request frame (730) is sent to a unicast, multicast or broadcast destination address.

10. A method according to claim 1, wherein when the second node, point or terminal (720) is configured to receive multiple measurement requests (730), it uses a precedence order as follows:
- Measurement requests received in individually addressed measurement request frames,
- Measurement requests received in multicast-group addressed measurement request frames, and
- Measurement requests received in broadcast addressed measurement request frames.

11. A method according to claim 1, wherein when the second node, point or terminal (720) is unable to make a requested measurement, the second node, point or terminal is configured to respond with an indication that it is incapable of completing the measurement request (730).

12. A method according to claim 11, wherein the second node, point or terminal (720) is unable to make a requested measurement in the following situations:
- The requested measurement type is not supported, or
- The measuring station cannot support requested parallel measurements due to one or more requests relating to different channels.

13. A method according to claim 6, wherein the measurement report (740) contains either an actual measurement start time, a measurement duration, a peer address, a traffic identifier, a reporting reason field, a transmitted medium access control service data units count, medium access control service data units discarded count, medium access control service data units failed count, medium access control service data units multiple retry count, quality of service Polls lost count, average queue delay, average transmit delay, or some combination thereof.

14. A method according to claim 6, wherein the second node, point or terminal (720) is configured to provide an autonomous measurement report (740) to a peer node, point or terminal as a triggered autonomous report.

15. A method according to claim 14, wherein the autonomous measurement report (740) includes a change in the condition of the second node, point or terminal (720).

16. A method according to claim 14. wherein the autonomous measurement report (740) is subject to a triggered condition.

17. A method according to claim 14, wherein the second node, point or terminal (720) is configured to provide an indication that it wishes to receive triggered autonomous reports (740).

18. A method according to claim 1, wherein the method further comprises implementing the step of the method via a computer program running in a processor, controller or other suitable module in one or more network nodes, points, terminals or elements in the wireless local area network.

19. A method according to claim 1, where the first node, point or terminal is a station and the second node, point or terminal is a station.

20. A method, comprising.
providing, by a first node, point or terminal (710), a measurement request (1160) having a trigger threshold (1155c) value for a number of consecutive medium access control protocol data unit or medium access control service data unit failures to a second node, point or terminal (720) for determining when to report quality of service metrics; and
receiving a report (1200, 1210b) on the quality of service metrics from the second node, point or terminal in a wireless local area network or other suitable network in response to a counter value for the number of consecutive medium access control protocol data unit or medium access control service data unit failures exceeding the trigger threshold (1155c) value for the number of consecutive medium access control protocol data unit or medium access control service data unit failures.

21. A computer program for carrying out the method as claimed in claim 20, when run on a processor.

22. Apparatus comprising:
means for providing a measurement request (1160) having a trigger threshold (1155c) value for a number of consecutive medium access control protocol data unit or medium access control service data unit failures to a node, point or terminal (720) for determining when to report quality of service metrics; and
means for receiving a report (1200,1210b) on the quality of service metrics from the node, point or terminal (720) in a wireless local area network or other suitable network in response to a counter value for the number of consecutive medium access control protocol data unit or medium access control service data unit failures exceeding the trigger threshold (1155c) value for the number of consecutive medium access control protocol data unit or medium access control service data unit failures.

23. An apparatus as claimed in claim 22, comprised in a node, point or terminal (710).

24. An apparatus as claimed in claim 22, comprised in one or more modules (712).

25. An apparatus according to any of claims 22 to 24, wherein the trigger threshold value is based at least partly on thresholds for quality of service statistics.

26. An apparatus according to any of claims 22 to 25, wherein the apparatus is an access point and the other node, point or terminal is a station.

27. An apparatus according to any of claims 22 to 26, wherein the apparatus is configured to provide more than one trigger threshold value, including multiple measurement types across multiple channels.

28. An apparatus according to any of claims 22 to 27, wherein the trigger threshold value is provided in a measurement request frame that contains either a randomization interval, a measurement duration, a peer address, a traffic identifier, a bin 0 range, a triggered reporting enabled, a reporting threshold, a group identity, or some combination thereof.

29. An apparatus according to any of claims 22 to 28, wherein If the trigger threshold value is met, then the other node, point or terminal sends a measurement report containing information about the quality of service.

30. Apparatus comprising:
means for receiving a measurement request (1160) having a trigger threshold (1155c) value for a number of consecutive medium access control protocol data unit or medium access control service data unit failures from a node, point or terminal (710) for determining when to report quality of service metrics; and
means for providing a report (1200,1210b) on the quality of service metrics in a wireless local area network or other suitable network to the node, point or terminal (710) in response to a counter value for the number of consecutive medium access control protocol data unit or medium access control service data unit failures exceeding the trigger threshold (1155c) value for the number of consecutive medium access control protocol data unit or medium access control service data unit failures.

31. An apparatus as claimed in claim 30, comprised in a node, point or terminal (720).

32. An apparatus as claimed in claim 30, comprised in one or more modules (722).

33. An apparatus according to any of claims 30 to 32, wherein the apparatus is configured to measure one or more channels itself, or the other node, point or terminal requests a peer node, point or terminal to measure the one or more channels on its behalf, or some combination thereof.

34. An apparatus according to any of claims 30 to 33, wherein the apparatus is configured to receive a measurement request frame containing one or more measurement request elements when the other node, point or terminal requests a measurement of one or more channels,

35. An apparatus according to any of claims 30 to 34, wherein the measurement request frame is received on a unicast, multicast or broadcast destination address.

36. An apparatus according to any of claims 30 to 35, wherein when the apparatus receives multiple measurement requests, the apparatus is configured to use a precedence order as follows:
- Measurement requests received In individually addressed measurement request frames,
- Measurement requests received in multicast-group addressed measurement request frames, and
- Measurement requests received in broadcast addressed measurement request frames.

37. An apparatus according to any of claims 30 to 36, wherein when the apparatus is unable to make a requested measurement, the apparatus is configured to respond with an indication that it is incapable of completing the measurement request.

38. An apparatus according to claim 37, wherein the apparatus is unable to make a requested measurement in the following situations:
- The requested measurement type is not supported, or
- The measuring station cannot support requested parallel measurements due to one or more requests relating to different channels.

39. An apparatus according to any of claims 30 to 38, wherein the report contains either an actual measurement start time, a measurement duration, a peer address, a traffic identifier, a reporting reason field, a transmitted medium access control service data unit count, medium access control service data unit discarded count, medium access control service data unit failed count, medium access control service data unit multiple retry count, quality of service, Polls lost count, average queue delay, average transmit delay, or some combination thereof.

40. An apparatus according to any of claims 30 to 39, wherein the apparatus is configured to provide an autonomous measurement report to a peer node, point or terminal as a triggered autonomous report.

41. An apparatus according to claim 40, wherein the autonomous measurement report includes a change in the condition of the second node, point or terminal.

42. An apparatus according to claim 40, wherein the autonomous measurement report is subject to a triggered condition.

43. An apparatus according to claim 39, wherein the apparatus receives an indication that it needs to provide triggered autonomous reports.

44. A computer program for carrying out a method, when run on a processor, comprising:
receiving, in a second node, point or terminal (720), a measurement request (730) having a trigger threshold (770) value for a number of consecutive medium access control protocol data unit or medium access control service data unit failures from a first node, point or terminal (710) for determining when to report the quality of service; and
providing a report (740) on the quality of service in a wireless local area network or other suitable network to the first node, point or terminal (710) in response to a counter value for the number of consecutive medium access control protocol data unit or medium access control service data unit failures exceeding the trigger threshold (770) value for the number of consecutive medium access control protocol data unit or medium access control service data unit failures.

## Patentansprüche

1. Verfahren, umfassend:
Empfangen einer Messanforderung (1160), welche einen Trigger-Schwellenwert (1155c) für eine Anzahl von aufeinander folgenden Medienzugangssteuerungs-Protokolldateneinheits- oder Medienzugangssteuerungs-Dienstdateneinheits-Fehlern aufweist, von einem ersten Knoten, Punkt oder Terminal (710) an einem zweiten Knoten, Punkt oder Terminal (720), um zu bestimmen, wann Dienstqualitäts-Messwerte zu melden sind, und
Bereitstellen einer Meldung (1200, 1210b) über die Dienstqualitäts-Messwerte in einem drahtlosen lokalen Netzwerk oder anderen geeigneten Netzwerk dem ersten Knoten, Punkt oder Terminal (710) in Reaktion darauf, dass ein Zählerwert für die Anzahl von aufeinander folgenden Medienzugangssteuerungs-Protokolldateneinheits- oder Medienzugangssteuerungs-Dienstdateneinheits-Fehlern den Trigger-Schwellenwert (1155c) für die Anzahl von aufeinander folgenden Medienzugangssteuerungs-Protokolldateneinheits- oder Medienzugangssteuerungs-Dienstdateneinheits-Fehlern übersteigt.

2. Verfahren nach Anspruch 1, wobei der Trigger-Schwellenwert zumindest teilweise auf Schwellenwerten für die Dienstqualitäts-Statistik basiert.

3. Verfahren nach Anspruch 1, wobei es sich bei dem ersten Knoten, Punkt oder Terminal (710) um einen Zugangspunkt und bei dem zweiten Knoten, Punkt oder Terminal (720) um eine Station handelt.

4. Verfahren nach Anspruch 1, wobei der/das erste Knoten, Punkt oder Terminal (710) dafür konfiguriert ist, mehr als einen Trigger-Schwellenwert bereitzustellen, umfassend mehrere Messtypen über mehrere Kanäle.

5. Verfahren nach Anspruch 1, wobei der Trigger-Schwellenwert in einem Messanforderungsrahmen (730) bereitgestellt wird, welcher entweder ein Randomisierungsintervall, eine Messdauer, eine gleichrangige Adresse, eine Verkehrskennung, einen Bin-0-Bereich, eine Freigabe einer getriggerten Meldung, einen Meldeschwellenwert, eine Gruppenidentität oder eine Kombination daraus enthält.

6. Verfahren nach Anspruch 1, wobei, wenn der Trigger-Schwellenwert erreicht ist, dann der/das zweite Knoten, Punkt oder Terminal (720) dafür konfiguriert ist, einen Messbericht (740) zu senden, welcher Informationen über die Dienstqualität enthält.

7. Verfahren nach Anspruch 1, wobei der/das zweite Knoten, Punkt oder Terminal (720) dafür konfiguriert ist, einen oder mehrere Kanäle selbst zu messen, oder der zweite Knoten oder Punkt dafür konfiguriert ist, bei einem gleichrangigen Knoten, Punkt oder Terminal anzufordern, den einen Kanal oder die mehreren Kanäle an seiner Stelle zu messen, oder eine Kombination daraus.

8. Verfahren nach Anspruch 7, wobei, wenn bei anderen Knoten, Punkten oder Terminals angefordert wird, einen oder mehrere Kanäle zu messen, der/das zweite Knoten, Punkt oder Terminal (720) dafür konfiguriert ist, einen Messanforderungsrahmen (730) bereitzustellen, welcher ein oder mehrere Messanforderungselemente enthält.

9. Verfahren nach Anspruch 8, wobei der Messanforderungsrahmen (730) an eine Einzelsendungs-, Sammelsendungs- oder Rundsendungs-Zieladresse gesendet wird.

10. Verfahren nach Anspruch 1, wobei, wenn der/das zweite Knoten, Punkt oder Terminal (720) dafür konfiguriert ist, mehrere Messanforderungen (730) zu empfangen, er/es eine Prioritätsreihenfolge wie folgt anwendet:
- Messanforderungen, die in individuell adressierten Messanforderungsrahmen empfangen werden,
- Messanforderungen, die in Sammelsendungsgruppen-adressierten Messanforderungsrahmen empfangen werden, und
- Messanforderungen, die in Rundsendungsadressierten Messanforderungsrahmen empfangen werden.

11. Verfahren nach Anspruch 1, wobei, wenn der/das zweite Knoten, Punkt oder Terminal (720) eine angeforderte Messung nicht vornehmen kann, der/das zweite Knoten, Punkt oder Terminal dafür konfiguriert ist, mit einer Anzeige zu antworten, dass er/es die Messanforderung (730) nicht erfüllen kann.

12. Verfahren nach Anspruch 11, wobei der/das zweite Knoten, Punkt oder Terminal (720) in den folgenden Situationen eine angeforderte Messung nicht vornehmen kann:
- der angeforderte Messtyp wird nicht unterstützt oder
- die Messstation kann angeforderte parallele Messungen nicht unterstützen, da sich eine oder mehrere Anforderungen auf verschiedene Kanäle beziehen.

13. Verfahren nach Anspruch 6, wobei der Messbericht (740) entweder eine aktuelle Messungsstartzeit, eine Messdauer, eine gleichrangige Adresse, eine Verkehrskennung, ein Berichtsgrundfeld, eine Zählung gesendeter Medienzugangssteuerungs-Dienstdateneinheiten, eine Zählung verworfener Medienzugangssteuerungs-Dienstdateneinheiten, eine Zählung fehlgeschlagener Medienzugangssteuerungs-Dienstdateneinheiten, eine Zählung mehrfach neu versuchter Medienzugangssteuerungs-Dienstdateneinheiten, eine Dienstqualität, eine Zählung abgewiesener Abfragen, eine mittlere Warteschlangenverzögerung, eine mittlere Sendeverzögerung oder eine Kombination daraus enthält.

14. Verfahren nach Anspruch 6, wobei der/das zweite Knoten, Punkt oder Terminal (720) dafür konfiguriert ist, einem gleichrangigen Knoten, Punkt oder Terminal einen unabhängigen Messbericht (740) als einen getriggerten unabhängigen Bericht bereitzustellen.

15. Verfahren nach Anspruch 14, wobei der unabhängige Messbericht (740) einen Wechsel in der Bedingung des zweiten Knotens, Punkts oder Terminals (720) umfasst.

16. Verfahren nach Anspruch 14, wobei der unabhängige Messbericht (740) einer getriggerten Bedingung unterliegt.

17. Verfahren nach Anspruch 14, wobei der/das zweite Knoten, Punkt oder Terminal (720) dafür konfiguriert ist, eine Anzeige bereitzustellen, dass er/es getriggerte unabhängige Berichte (740) empfangen will.

18. Verfahren nach Anspruch 1, wobei das Verfahren ferner das Realisieren des Schritts des Verfahrens über ein Computerprogramm umfasst, welches in einem Prozessor, einer Steuerung oder einem anderen geeigneten Modul in einem oder mehreren Netzwerkknoten, -punkten, -terminals oder -elementen in dem drahtlosen lokalen Netzwerk abläuft.

19. Verfahren nach Anspruch 1, wobei es sich bei dem ersten Knoten, Punkt oder Terminal um eine Station handelt und bei dem zweiten Knoten, Punkt oder Terminal um eine Station handelt.

20. Verfahren, umfassend:
Bereitstellen einer Messanforderung (1160), welche einen Trigger-Schwellenwert (1155c) für eine Anzahl von aufeinander folgenden Medienzugangssteuerungs-Protokolldateneinheits- oder Medienzugangssteuerungs-Dienstdateneinheits-Fehlern aufweist, durch ein(en) ersten/erstes Knoten, Punkt oder Terminal (710) für ein(en) zweiten/zweites Knoten, Punkt oder Terminal (720), um zu bestimmen, wann Dienstqualitäts-Messwerte zu melden sind; und
Empfangen einer Meldung (1200, 1210b) über die Dienstqualitäts-Messwerte von dem zweiten Knoten, Punkt oder Terminal in einem drahtlosen lokalen Netzwerk oder anderen geeigneten Netzwerk in Reaktion darauf, dass ein Zählerwert für die Anzahl von aufeinander folgenden Medienzugangssteuerungs-Protokolldateneinheits- oder Medienzugangssteuerungs-Dienstdateneinheits-Fehlern den Trigger-Schwellenwert (1155c) für die Anzahl von aufeinander folgenden Medienzugangssteuerungs-Protokolldateneinheits- oder Medienzugangssteuerungs-Dienstdateneinheits-Fehlern übersteigt.

21. Computerprogramm zum Durchführen des Verfahrens nach Anspruch 20, wenn man es auf einem Prozessor ablaufen lässt.

22. Vorrichtung, umfassend:
Mittel zum Bereitstellen einer Messanforderung (1160), welche einen Trigger-Schwellenwert (1155c) für eine Anzahl von aufeinander folgenden Medienzugangssteuerungs-Protokolldateneinheits- oder Medienzugangssteuerungs-Dienstdateneinheits-Fehlern aufweist, für ein(en) Knoten, Punkt oder Terminal (720), um zu bestimmen, wann Dienstqualitäts-Messwerte zu melden sind; und
Mittel zum Empfangen einer Meldung (1200, 1210b) über die Dienstqualitäts-Messwerte von dem Knoten, Punkt oder Terminal (720) in einem drahtlosen lokalen Netzwerk oder anderen geeigneten Netzwerk in Reaktion darauf, dass ein Zählerwert für die Anzahl von aufeinander folgenden Medienzugangssteuerungs-Protokolldateneinheits- oder Medienzugangssteuerungs-Dienstdateneinheits-Fehlern den Trigger-Schwellenwert (1155c) für die Anzahl von aufeinander folgenden Medienzugangssteuerungs-Protokolldateneinheits- oder Medienzugangssteuerungs-Dienstdateneinheits-Fehlern übersteigt.

23. Vorrichtung nach Anspruch 22, enthalten in einem Knoten, Punkt oder Terminal (710).

24. Vorrichtung nach Anspruch 22, enthalten in einem oder mehreren Modulen (712).

25. Vorrichtung nach einem der Ansprüche 22 bis 24, wobei der Trigger-Schwellenwert zumindest teilweise auf Schwellenwerten für die Dienstqualitäts-Statistik basiert.

26. Vorrichtung nach einem der Ansprüche 22 bis 25, wobei es sich bei der Vorrichtung um einen Zugangspunkt und bei dem anderen Knoten, Punkt oder Terminal um eine Station handelt.

27. Vorrichtung nach einem der Ansprüche 22 bis 26, wobei die Vorrichtung dafür konfiguriert ist, mehr als einen Trigger-Schwellenwert bereitzustellen, umfassend mehrere Messtypen über mehrere Kanäle.

28. Vorrichtung nach einem der Ansprüche 22 bis 27, wobei der Trigger-Schwellenwert in einem Messanforderungsrahmen bereitgestellt wird, welcher entweder ein Randomisierungsintervall, eine Messdauer, eine gleichrangige Adresse, eine Verkehrskennung, einen Bin-0-Bereich, eine Freigabe einer getriggerten Meldung, einen Meldeschwellenwert, eine Gruppenidentität oder eine Kombination daraus enthält.

29. Vorrichtung nach einem der Ansprüche 22 bis 28, wobei, wenn der Trigger-Schwellenwert erreicht ist, dann der/das andere Knoten, Punkt oder Terminal einen Messbericht sendet, welcher Informationen über die Dienstqualität enthält.

30. Vorrichtung, umfassend:
Mittel zum Empfangen einer Messanforderung (1160), welche einen Trigger-Schwellenwert (1155c) für eine Anzahl von aufeinander folgenden Medienzugangssteuerungs-Protokolldateneinheits- oder Medienzugangssteuerungs-Dienstdateneinheits-Fehlern aufweist, von einem Knoten, Punkt oder Terminal (710), um zu bestimmen, wann Dienstqualitäts-Messwerte zu melden sind; und
Mittel zum Bereitstellen einer Meldung (1200, 1210b) über die Dienstqualitäts-Messwerte in einem drahtlosen lokalen Netzwerk oder anderen geeigneten Netzwerk für den/das Knoten, Punkt oder Terminal (710) in Reaktion darauf, dass ein Zählerwert für die Anzahl von aufeinander folgenden Medienzugangssteuerungs-Protokolldateneinheits- oder Medienzugangssteuerungs-Dienstdateneinheits-Fehlern den Trigger-Schwellenwert (1155c) für die Anzahl von aufeinander folgenden Medienzugangssteuerungs-Protokolldateneinheits-oder Medienzugangssteuerungs-Dienstdateneinheits-Fehlern übersteigt.

31. Vorrichtung nach Anspruch 30, enthalten in einem Knoten, Punkt oder Terminal (720).

32. Vorrichtung nach Anspruch 30, enthalten in einem oder mehreren Modulen (722).

33. Vorrichtung nach einem der Ansprüche 30 bis 32, wobei die Vorrichtung dafür konfiguriert ist, einen oder mehrere Kanäle selbst zu messen, oder der/das andere Knoten, Punkt oder Terminal bei einem gleichrangigen Knoten, Punkt oder Terminal anfordert, den einen Kanal oder die mehreren Kanäle an seiner Stelle zu messen, oder eine Kombination daraus.

34. Vorrichtung nach einem der Ansprüche 30 bis 33, wobei die Vorrichtung dafür konfiguriert ist, einen Messanforderungsrahmen zu empfangen, der ein oder mehrere Messanforderungselemente enthält, wenn der/das andere Knoten, Punkt oder Terminal eine Messung eines oder mehrerer Kanäle anfordert.

35. Vorrichtung nach einem der Ansprüche 30 bis 34, wobei der Messanforderungsrahmen an einer Einzelsendungs-, Sammelsendungs- oder Rundsendungs-Zieladresse empfangen wird.

36. Vorrichtung nach einem der Ansprüche 30 bis 35, wobei, wenn die Vorrichtung mehrere Messanforderungen empfängt, die Vorrichtung dafür konfiguriert ist, eine Prioritätsreihenfolge wie folgt anzuwenden:
- Messanforderungen, die in individuell adressierten Messanforderungsrahmen empfangen werden,
- Messanforderungen, die in Sammelsendungsgruppen-adressierten Messanforderungsrahmen empfangen werden, und
- Messanforderungen, die in Rundsendungsadressierten Messanforderungsrahmen empfangen werden.

37. Vorrichtung nach einem der Ansprüche 30 bis 36, wobei, wenn die Vorrichtung eine angeforderte Messung nicht vornehmen kann, die Vorrichtung dafür konfiguriert ist, mit einer Anzeige zu antworten, dass sie die Messanforderung nicht erfüllen kann.

38. Vorrichtung nach Anspruch 37, wobei die Vorrichtung in den folgenden Situationen eine angeforderte Messung nicht vornehmen kann:
- der angeforderte Messtyp wird nicht unterstützt oder
- die Messstation kann angeforderte parallele Messungen nicht unterstützen, da sich eine oder mehrere Anforderungen auf verschiedene Kanäle beziehen.

39. Vorrichtung nach einem der Ansprüche 30 bis 38, wobei der Bericht entweder eine aktuelle Messungsstartzeit, eine Messdauer, eine gleichrangige Adresse, eine Verkehrskennung, ein Berichtsgrundfeld, eine Zählung gesendeter Medienzugangssteuerungs-Dienstdateneinheiten, eine Zählung verworfener Medienzugangssteuerungs-Dienstdateneinheiten, eine Zählung fehlgeschlagener Medienzugangssteuerungs-Dienstdateneinheiten, eine Zählung mehrfach neu versuchter Medienzugangssteuerungs-Dienstdateneinheiten, eine Dienstqualität, eine Zählung abgewiesener Abfragen, eine mittlere Warteschlangenverzögerung, eine mittlere Sendeverzögerung oder eine Kombination daraus enthält.

40. Vorrichtung nach einem der Ansprüche 30 bis 39, wobei die Vorrichtung dafür konfiguriert ist, einem gleichrangigen Knoten, Punkt oder Terminal einen unabhängigen Messbericht als einen getriggerten unabhängigen Bericht bereitzustellen.

41. Vorrichtung nach Anspruch 40, wobei der unabhängige Messbericht einen Wechsel in der Bedingung des zweiten Knotens, Punkts oder Terminals umfasst.

42. Vorrichtung nach Anspruch 40, wobei der unabhängige Messbericht einer getriggerten Bedingung unterliegt.

43. Vorrichtung nach Anspruch 39, wobei die Vorrichtung eine Anzeige empfängt, dass sie getriggerte unabhängige Berichte bereitstellen muss.

44. Computerprogramm zum Durchführen eines Verfahrens, wenn man es auf einem Prozessor ablaufen lässt, umfassend:
Empfangen einer Messanforderung (730), welche einen Trigger-Schwellenwert (770) für eine Anzahl von aufeinander folgenden Medienzugangssteuerungs-Protokolldateneinheits- oder Medienzugangssteuerungs-Dienstdateneinheits-Fehlern aufweist, von einem ersten Knoten, Punkt oder Terminal (710) in einem zweiten Knoten, Punkt oder Terminal (720), um zu bestimmen, wann Dienstqualitäts-Messwerte zu melden sind; und
Bereitstellen einer Meldung (740) über die Dienstqualität in einem drahtlosen lokalen Netzwerk oder anderen geeigneten Netzwerk dem ersten Knoten, Punkt oder Terminal (710) in Reaktion darauf, dass ein Zählerwert für die Anzahl von aufeinander folgenden Medienzugangssteuerungs-Protokolldateneinheits- oder Medienzugangssteuerungs-Dienstdateneinheits-Fehlern den Trigger-Schwellenwert (770) für die Anzahl von aufeinander folgenden Medienzugangssteuerungs-Protokolldateneinheits- oder Medienzugangssteuerungs-Dienstdateneinheits-Fehlern übersteigt.

## Revendications

1. Procédé comprenant les étapes suivantes :
recevoir, par un second noeud, point ou terminal (720), une demande de mesure (1160) ayant une valeur de seuil de déclenchement (1155c) pour un certain nombre de dysfonctionnements consécutifs d'unité de données de protocole de contrôle d'accès au support ou d'unité de données de service de contrôle d'accès au support depuis un premier noeud, point ou terminal (710) pour déterminer quand rapporter des mesures de qualité de service ; et
fournir un rapport (1200, 1210b) sur les mesures de qualité de service dans un réseau local sans fil ou un autre réseau approprié au premier noeud, point ou terminal (710) en réponse à une valeur de compteur pour le nombre de dysfonctionnements consécutifs d'unité de données de protocole de contrôle d'accès au support ou d'unité de données de service de contrôle d'accès au support dépassant la valeur du seuil de déclenchement (1155c) pour le nombre de dysfonctionnements consécutifs d'unité de données de protocole de contrôle d'accès au support ou d'unité de données de service de contrôle d'accès au support.

2. Procédé selon la revendication 1, dans lequel le seuil de déclenchement est basé, au moins partiellement, sur des seuils de statistiques de qualité de service.

3. Procédé selon la revendication 1, dans lequel le premier noeud, point ou terminal (710) est un point d'accès et le second noeud, point ou terminal (720) est une station.

4. Procédé selon la revendication 1, dans lequel le premier noeud, point ou terminal (710) est configuré pour fournir plus d'une valeur du seuil de déclenchement, dont plusieurs types de mesures à travers plusieurs canaux.

5. Procédé selon la revendication 1, dans lequel la valeur du seuil de déclenchement est fournie dans une trame de demande de mesure (730) qui contient soit un intervalle de randomisation, soit une durée de mesure, soit une adresse de pair, soit un identificateur de trafic, soit une plage de 0 de remplissage, soit une activation de rapport déclenché, soit un seuil de rapport, soit une identité de groupe, soit une combinaison de ceux-ci.

6. Procédé selon la revendication 1, dans lequel, si la valeur du seuil de déclenchement est atteinte, alors le second noeud, point ou terminal (720) est configuré pour envoyer un rapport de mesure (740) contenant des informations sur la qualité de service.

7. Procédé selon la revendication 1, dans lequel, si le second noeud, point ou terminal (720) est configuré pour mesurer lui-même un ou plusieurs canaux, ou le second noeud ou point est configuré pour demander à un noeud, un point ou un terminal pair, ou à une combinaison de ceux-ci, de mesurer le ou les canaux en leur nom.

8. Procédé selon la revendication 7, dans lequel, lorsqu'il est demandé à d'autres noeuds, points ou terminaux de mesurer un ou plusieurs canaux, le second noeud, point ou terminal (720) est configuré pour fournir une trame de demande de mesure (730) contenant un ou plusieurs éléments de demande de mesure.

9. Procédé selon la revendication 8, dans lequel la trame de demande de mesure (730) est envoyée à une adresse de destination d'envoi individuel, de multidiffusion ou de diffusion générale.

10. Procédé selon la revendication 1, dans lequel, lorsque le second noeud, point ou terminal (720) est configuré pour recevoir plusieurs demandes de mesure (730), il utilise l'ordre de priorité suivant :
les demandes de mesure reçues dans des trames de demande de mesure adressées individuellement ;
les demandes de mesure reçues dans des trames de demande de mesure adressées à un groupe de multidiffusion ;
les demandes de mesure reçues dans des trames de demande de mesure adressées par diffusion générale.

11. Procédé selon la revendication 1, dans lequel, lorsque le second noeud, point ou terminal (720) est incapable de procéder à une mesure demandée, le second noeud, point ou terminal est configuré pour répondre avec une indication qu'il est incapable de répondre à la demande de mesure (730).

12. Procédé selon la revendication 11, dans lequel le second noeud, point ou terminal (720) est incapable de procéder à une mesure demandée dans les situations suivantes :
le type de mesure demandé n'est pas supporté, ou
la station de mesure ne peut pas supporter des mesures parallèles demandées du fait d'une ou plusieurs demandes concernant différents canaux.

13. Procédé selon la revendication 6, dans lequel le rapport de mesure (740) contient soit un temps de début de mesure réel, une durée de mesure, une adresse de pair, un identificateur de trafic, un champ de raison de rapport, un compteur d'unités de données de service de contrôle d'accès au support transmises, un compteur d'unités de données de service de contrôle d'accès au support écartées, un compteur d'unités de données de service de contrôle d'accès au support défaillantes, un compteur de tentatives multiples d'unités de données de service de contrôle d'accès au support, un compteur de perte de vote de qualité de service, un délai de file d'attente moyen, un délai de transmission moyen, soit une combinaison de ceux-ci.

14. Procédé selon la revendication 6, dans lequel le second noeud, point ou terminal (720) est configuré pour fournir un rapport de mesure autonome (740) à un noeud, un point ou un terminal pair comme rapport autonome déclenché.

15. Procédé selon la revendication 14, dans lequel le rapport de mesure autonome (740) comprend un changement dans la condition du second noeud, point ou terminal (720).

16. Procédé selon la revendication 14, dans lequel le rapport de mesure autonome (740) est sujet à une condition déclenchée.

17. Procédé selon la revendication 14, dans lequel le second noeud, point ou terminal (720) est configuré pour fournir une indication qu'il souhaite recevoir des rapports autonomes déclenchés (740).

18. Procédé selon la revendication 1, dans lequel le procédé comprend en outre de mettre en oeuvre l'étape du procédé par l'intermédiaire d'un programme exécuté sur un processeur, un contrôleur ou tout autre module approprié dans un ou plusieurs noeuds, points, terminaux ou éléments de réseau dans le réseau local sans fil.

19. Procédé selon la revendication 1, dans lequel le premier noeud, point ou terminal est une station et le second noeud, point ou terminal est une station.

20. Procédé comprenant les étapes suivantes :
fournir, par un premier noeud, point ou terminal (710), une demande de mesure (1160) ayant une valeur de seuil de déclenchement (1155c) pour un certain nombre de dysfonctionnements consécutifs d'unité de données de protocole de contrôle d'accès au support ou d'unité de données de service de contrôle d'accès au support à un second noeud, point ou terminal (720) pour déterminer quand rapporter des mesures de qualité de service ; et
recevoir un rapport (1200, 1210b) sur les mesures de qualité de service depuis le second noeud, point ou terminal dans un réseau local sans fil ou un autre réseau approprié en réponse à une valeur de compteur pour le nombre de dysfonctionnements consécutifs d'unité de données de protocole de contrôle d'accès au support ou d'unité de données de service de contrôle d'accès au support dépassant la valeur du seuil de déclenchement (1155c) pour le nombre de dysfonctionnements consécutifs d'unité de données de protocole de contrôle d'accès au support ou d'unité de données de service de contrôle d'accès au support.

21. Programme informatique pour exécuter le procédé tel que revendiqué dans la revendication 20, lorsqu'il est exécuté sur un processeur.

22. Appareil comprenant :
des moyens pour fournir une demande de mesure (1160) ayant une valeur de seuil de déclenchement (1155c) pour un certain nombre de dysfonctionnements consécutifs d'unité de données de protocole de contrôle d'accès au support ou d'unité de données de service de contrôle d'accès au support à un noeud, un point ou un terminal (720) pour déterminer quand rapporter des mesures de qualité de service ; et
des moyens pour recevoir un rapport (1200, 1210b) sur les mesures de qualité de service depuis le noeud, le point ou le terminal (720) dans un réseau local sans fil ou un autre réseau approprié en réponse à une valeur de compteur pour le nombre de dysfonctionnements consécutifs d'unité de données de protocole de contrôle d'accès au support ou d'unité de données de service de contrôle d'accès au support dépassant la valeur du seuil de déclenchement (1155c) pour le nombre de dysfonctionnements consécutifs d'unité de données de protocole de contrôle d'accès au support ou d'unité de données de service de contrôle d'accès au support.

23. Appareil tel que revendiqué dans la revendication 22, contenu dans un noeud, un point ou un terminal (710).

24. Appareil tel que revendiqué dans la revendication 22, contenu dans un ou plusieurs modules (712).

25. Appareil selon l'une quelconque des revendications 22 à 24, dans lequel la valeur du seuil de déclenchement est basée au moins partiellement sur des seuils de statistiques de qualité de service.

26. Appareil selon l'une quelconque des revendications 22 à 25, dans lequel l'appareil est un point d'accès et l'autre noeud, point ou terminal est une station.

27. Appareil selon l'une quelconque des revendications 22 à 26, dans lequel l'appareil est configuré pour fournir plus d'une valeur du seuil de déclenchement, dont plusieurs types de mesures à travers plusieurs canaux.

28. Appareil selon l'une quelconque des revendications 22 à 27, dans lequel la valeur du seuil de déclenchement est fournie dans une trame de demande de mesure qui contient soit un intervalle de randomisation, soit une durée de mesure, soit une adresse de pair, soit un identificateur de trafic, soit une plage de 0 de remplissage, soit une activation de rapport déclenché, soit un seuil de rapport, soit une identité de groupe, soit une combinaison de ceux-ci.

29. Appareil selon l'une quelconque des revendications 22 à 28, dans lequel, si la valeur du seuil de déclenchement est atteinte, alors l'autre noeud, point ou terminal envoie un rapport de mesure contenant des informations sur la qualité de service.

30. Appareil comprenant :
des moyens pour recevoir une demande de mesure (1160) ayant une valeur de seuil de déclenchement (1155c) pour un certain nombre de dysfonctionnements consécutifs d'unité de données de protocole de contrôle d'accès au support ou d'unité de données de service de contrôle d'accès au support depuis un noeud, un point ou un terminal (710) pour déterminer quand rapporter des mesures de qualité de service ; et
des moyens pour fournir un rapport (1200, 1210b) sur les mesures de qualité de service dans un réseau local sans fil ou tout autre réseau approprié au noeud, au point ou au terminal (710) en réponse à une valeur de compteur pour le nombre de dysfonctionnements consécutifs d'unité de données de protocole de contrôle d'accès au support ou d'unité de données de service de contrôle d'accès au support dépassant la valeur du seuil de déclenchement (1155c) pour le nombre de dysfonctionnements consécutifs d'unité de données de protocole de contrôle d'accès au support ou d'unité de données de service de contrôle d'accès au support.

31. Appareil tel que revendiqué dans la revendication 30, contenu dans un noeud, un point ou un terminal (720).

32. Appareil tel que revendiqué dans la revendication 30, contenu dans un ou plusieurs modules (722).

33. Appareil selon l'une quelconque des revendications 30 à 32, dans lequel l'appareil est configuré pour mesurer lui-même un ou plusieurs canaux, ou l'autre noeud, point ou terminal demande à un noeud, à un point ou à un terminal pair, ou à une combinaison de ceux-ci, de mesurer le ou les canaux en leur nom.

34. Appareil selon l'une quelconque des revendications 30 à 33, dans lequel l'appareil est configuré pour recevoir une trame de demande de mesure contenant un ou plusieurs éléments de demande de mesure, lorsque l'autre noeud, point ou terminal demande une mesure d'un ou plusieurs canaux.

35. Appareil selon l'une quelconque des revendications 30 à 34, dans lequel la trame de demande de mesure est reçue sur une adresse de destination d'envoi individuel, de multidiffusion ou de diffusion générale.

36. Appareil selon l'une quelconque des revendications 30 à 35, dans lequel, lorsque l'appareil reçoit plusieurs demandes de mesure, l'appareil est configuré pour utiliser l'ordre de priorité suivant :
les demandes de mesure reçues dans des trames de demande de mesure adressées individuellement ;
les demandes de mesure reçues dans des trames de demande de mesure adressées à un groupe de multidiffusion ;
les demandes de mesure reçues dans des trames de demande de mesure adressées par diffusion générale.

37. Appareil selon l'une quelconque des revendications 30 à 36, dans lequel, lorsque l'appareil est incapable de procéder à une mesure demandée, l'appareil est configuré pour répondre avec une indication qu'il est incapable de répondre à la demande de mesure.

38. Appareil selon la revendication 37, dans lequel l'appareil est incapable de procéder à une mesure demandée dans les situations suivantes :
le type de mesure demandé n'est pas supporté, ou
la station de mesure ne peut pas supporter des mesures parallèles demandées du fait d'une ou plusieurs demandes concernant différents canaux.

39. Appareil selon l'une quelconque des revendications 30 à 38, dans lequel le rapport contient soit un temps de début de mesure réel, une durée de mesure, une adresse de pair, un identificateur de trafic, un champ de raison de rapport, un compteur d'unités de données de service de contrôle d'accès au support transmises, un compteur d'unités de données de service de contrôle d'accès au support écartées, un compteur d'unités de données de service de contrôle d'accès au support défaillantes, un compteur de tentatives multiples d'unités de données de service de contrôle d'accès au support, un compteur de perte de vote de qualité de service, un délai de file d'attente moyen, un délai de transmission moyen, soit une combinaison de ceux-ci.

40. Appareil selon l'une quelconque des revendications 30 à 39, dans lequel l'appareil est configuré pour fournir un rapport de mesure autonome à un noeud, un point ou un terminal pair comme rapport autonome déclenché.

41. Appareil selon la revendication 40, dans lequel le rapport de mesure autonome comprend un changement dans la condition du second noeud, point ou terminal.

42. Appareil selon la revendication 40, dans lequel le rapport de mesure autonome est sujet à une condition déclenchée.

43. Appareil selon la revendication 39, dans lequel l'appareil reçoit une indication qu'il doit fournir des rapports autonomes déclenchés.

44. Programme informatique pour exécuter un procédé, lorsqu'il est exécuté sur un processeur, comprenant les étapes suivantes :
recevoir, dans un second noeud, point ou terminal (720), une demande de mesure (730) ayant une valeur de seuil de déclenchement (770) pour un certain nombre de dysfonctionnements consécutifs d'unité de données de protocole de contrôle d'accès au support ou d'unité de données de service de contrôle d'accès au support depuis un premier noeud, point ou terminal (710) pour déterminer quand rapporter la qualité de service ; et
fournir un rapport (740) sur la qualité de service dans un réseau local sans fil ou tout autre réseau approprié au premier noeud, point ou terminal (710) en réponse à une valeur de compteur pour le nombre de dysfonctionnements consécutifs d'unité de données de protocole de contrôle d'accès au support ou d'unité de données de service de contrôle d'accès au support dépassant la valeur du seuil de déclenchement (770) pour le nombre de dysfonctionnements consécutifs d'unité de données de protocole de contrôle d'accès au support ou d'unité de données de service de contrôle d'accès au support.
